Europäisches Patentamt

European Patent Office

Office européen des brevets

(19)

(11) Veröffentlichungsnummer: **0 014 389**
A1

(12) # EUROPÄISCHE PATENTANMELDUNG

(21) Anmeldenummer: **80100362.5**

(22) Anmeldetag: **24.01.80**

(51) Int. Cl.³: **F 16 F 3/10**
**F 16 F 15/04, B 60 K 5/12**

(30) Priorität: **01.02.79 DE 2903765**

(43) Veröffentlichungstag der Anmeldung:
**20.08.80 Patentblatt 80/17**

(84) Benannte Vertragsstaaten:
**FR GB IT NL SE**

(71) Anmelder: **Ingenieurkontor Lübeck, Prof. Gabler oHG**
**Niels-Bohr-Ring 5**
**D-2400 Lübeck(DE)**

(72) Erfinder: **Heckel, Günter**
**Balauerfohr 14**
**D-2400 Lübeck(DE)**

(74) Vertreter: **Wilcken, Thomas, Dipl.-Ing. et al,**
**Musterbahn 1**
**D-2400 Lübeck(DE)**

(54) **Weichfederndes Lager.**

(57) Dieses Lager für Aggregate, deren mechanische Schwingungen zu dämpfen sind, besteht aus einem Gehäuse (1) und einer darin untergebrachten metallischen Lagerungsfeder (2), die in Gravitationsvorrichtung wirkende Kräfte aufnimmt.

Damit das Lager in einfacher Weise sowohl in der Wirkungslinie der Gravitationskraft als auch quer dazu wirkende mechanische Energie absorbieren und in Richtung der genannten Wirkungslinie auch eine Einstellung des Spieles der Feder (2) zulassen kann, wird das Lager so ausgestaltet, daß der Lagerungsfeder (2) in dem Gehäuse (1) eine Stützfeder (7) seitlich so zugeordnet ist, daß diese nach Überwindung des Federspiels der Lagerungsfeder an deren Belastung in ihrer Federrichtung beteiligt ist und ferner horizontale Kräfte aufnimmt, und daß die Stützfeder (7) zur Einstellung des Federspiels der Lagerungsfeder an dem Gehäuse in der Höhe einstellbar und feststellbar ist.

Figur 1

EP 0 014 389 A1

- 1 -

Anmelderin: Ingenieurkontor Lübeck, Prof. Gabler OHG,
Niels-Bohr-Ring 5, 2400 Lübeck


Weichfederndes Lager


Die Erfindung betrifft ein weichfederndes Lager für Aggregate, deren mechanische Schwingungen zu dämpfen sind, bestehend aus einem Gehäuse und einer darin untergebrachten, metallenen Lagerungsfeder, die in Gravitationsrichtung wirkende Kräfte aufnimmt.

Es ist bekannt, Aggregate, wie z.B. schwere Schiffsmotoren, bei denen die Seegangsbewegungen nicht dazu führen dürfen, daß die elastisch gelagerten Motoren hart in ihren Lagerungen aufstoßen, in der Weise zu lagern, daß zum einen aus metallenen Schraubenfedern bestehende Lagerungsfedern verwendet werden, die im wesentlichen in Gravitationsrichtung wirkende Belastungen aufnehmen. Da durch die Seegangsbewegungen jedoch auch horizontale Kräfte auftreten, werden zum anderen externe Federelemente verwendet, die getrennt von den Lagern mit den Lagerungsfedern an anderen Stellen der Motor- oder Auflagerbereiche angeordnet sind und eine horizontale Federrichtung aufweisen, um die von außen einwirkenden horizontalen Kräfte abzufangen. Eine solche Lagerung von insbesondere in Schiffen montierten Aggregaten, die selbst Schwingungserzeuger von nicht unbeträchtlichem Ausmaß sind, ist recht aufwendig im Material sowie in

0014389

der Herstellung und erfordert hinsichtlich der gesonderten und seitlich der Aggregate angeordneten Federelemente entsprechenden Platzbedarf. Hinzu kommt, daß für die gesonderten Federelemente auch gesonderte seitliche Auflagerabstützungen geschaffen werden müssen. Ein weiterer Nachteil besteht darin, daß ein gewünschtes Federspiel der Lagerungsfeder bei dieser Art der Aggregatlagerung schwierig einzuhalten ist, da daß vorausberechnete Federspiel vom tatsächlichen infolge Fertigungstoleranzen sowie Massen- und Schwerpunktsungenauigkeiten abweicht.

Die Aufgabe der Erfindung besteht in der Schaffung eines weichfedernden Lagers für insbesondere starken mechanischen Schwingungen unterworfenen Aggregaten gemäß dem Oberbegriff des Anspruches 1, das auf einfache Weise sowohl in der Wirkungslinie der Gravitationskraft als auch quer dazu wirkende mechanische Energie absorbiert und in Richtung der Wirkungslinie der Gravitationskraft eine Federspieleinstellung zuläßt.

Zur Lösung dieser Aufgabe wird das Lager der erwähnten Art nach der Erfindung so ausgebildet, daß der Lagerungsfeder in dem Gehäuse eine Stützfeder seitlich so zugeordnet ist, daß diese nach Überwindung des Federspiels der Lagerungsfeder an deren Belastung in ihrer Federrichtung beteiligt ist und ferner horizontale Kräfte aufnimmt, und daß die Stützfeder zur Einstellung des Federspiels der Lagerungsfeder an dem Gehäuse in der Höhe einstellbar und feststellbar ist.

Mit dieser Lösung ist ein Lager geschaffen, das beide senkrecht zueinander wirkende Federungen in sich vereinigt, so daß die für ein Aggregat zu verwendende Lageranzahl beträchtlich herabgesetzt ist. Des weiteren ist das in der Wirkungslinie der Gravitation wirkende und vorzusehene Federspiel genau einstellbar, da die Stützfeder, nachdem das Aggregat auf die erfindungsgemäßen Lager abgesetzt und montiert worden ist, relativ zu der Lagerungsfeder in der

Höhe einstellbar und feststellbar ist. Insgesamt ist diese Lösung durch eine einfache Konstruktion verwirklicht, die zu einem kompakten und relativ billig herstellbaren Lager führt.

In den Unteransprüchen 2 bis 4 sind bevorzugte Ausführungsformen des neuen Lagers unter Schutz gestellt. Diese Ausführungsformen sind besonders einfach herzustellen.

Die Erfindung ist nachstehend anhand eines in den anliegenden Zeichnungen dargestellten Ausführungsbeispieles näher erläutert. Es zeigen:

Figur    1    teils  in axialem Schnitt und teils  in Seitenansicht ein Lager nach der Erfindung,

Figur    2    eine Aufsicht auf das Beispiel nach Figur 1,

Figur    3    eine abgeänderte Ausführungsform in Aufsicht.

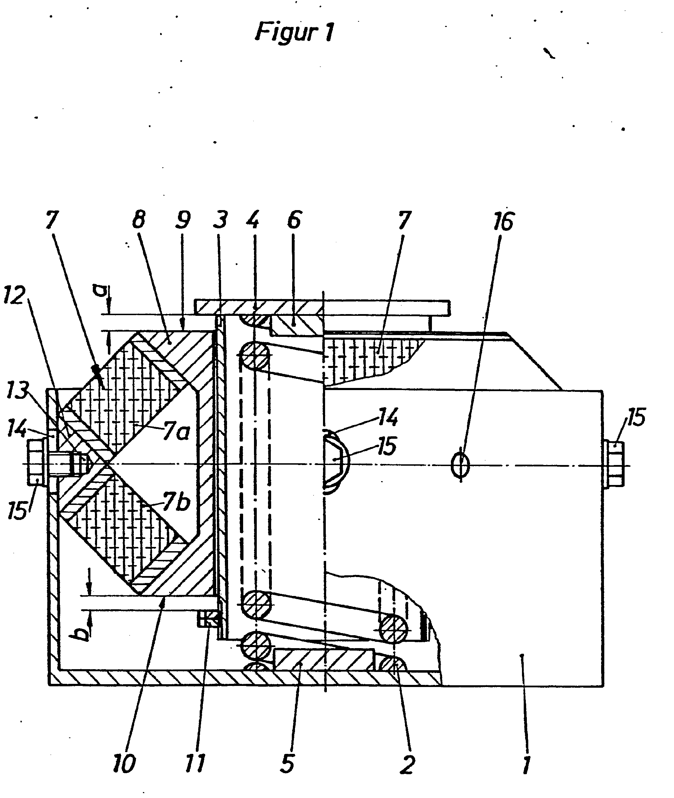

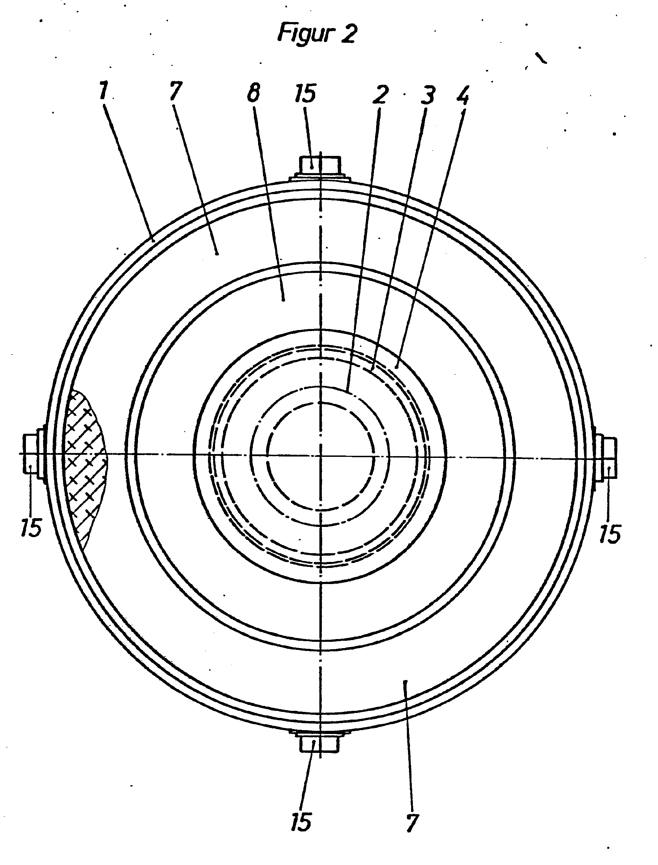

Nach den Figuren 1 und 2 besteht das neue Lager aus einem beispielsweise kreisrunden Gehäuse 1, in dessen Zentrum eine in Gravitationsrichtung belastbare, als Druckfeder ausgebildete Lagerungsfeder 2 angeordnet ist, die ihrerseits von einem zylindrischen Gehäuseteil 3 umgeben ist. Das Gehäuseteil 3 schließt oben mit einer Gehäuseplattform 4 ab, die als Auflagerfläche für ein Schwingungen erzeugendes Aggregat, z.B. ein Schiffsdieselmotor, dient. Die Lagerungsfeder 2, die aus einer metallenen Schraubenfeder bestehen kann und für eine Eigenfrequenz von vorzugsweise 3 Hz ausgelegt ist, ist durch Positionsteile 5 und 6 am Boden des Gehäuses 1 bzw. an der Plattform 4 lagegesichert.

Die Lagerungsfeder 2 einschließlich des ihr zugeordneten Gehäuseteiles 3 ist von einer Stützfeder 7 umgeben, die z.B. aus zwei V-förmig zueinander angeordneten Federelementen 7a, 7b besteht. Diese beiden Federelemente sind beispielsweise aus Gummimaterial hergestellt, können aber auch aus metallenen Federelementen bestehen. Wie aus den Figuren 1 und 2 ersichtlich ist, umgeben die Gummifederelemente die schraubenförmige Lagerungsfeder 2 ringförmig in einem Stück. Sie können jedoch auch so ausgebildet sein, daß sie sich nur über eine Teillänge oder über einzelne Teillängen erstrecken, was unter anderem von der Gesamtgestaltung des Lagers abhängt, die wiederum von Fall zu Fall entsprechend den jeweiligen Einzelbedingungen veränderlich ist.

Die einander abgekehrten Enden der beiden Federelemente 7a, 7b sind durch eine gemeinsame Überbrückung 8 starr miteinander verbunden, die das Gehäuseteil 3 mit geringem Spiel ringförmig umgibt. Die Überbrückung 8 weist Anschlagflächen 9, 10 auf, gegen welche einerseits die Plattform 4 und andererseits einstellbare Anschlagkörper 11 des Gehäuseteiles 3 zur Anlage kommen, wenn das Federspiel a,b der Lagerungsfeder 2 im Betrieb des Lagers überwunden ist. Die Anschlagkörper 11 können beispielsweise aus Nutringmuttern bestehen, die am freien Ende des zylindrischen Gehäuseteiles 3 auf einem Gewindeabschnitt gegenseitig gekontert sind.

Die anderen Enden der Federelemente 7a, 7b sind an einer ringförmigen oder aus Segmenten oder Abschnitten bestehenden Halterung 12 mit mehreren Gewindelöchern 13 befestigt. Das Gehäuse 1 weist auf seinem Umfang verteilt entsprechend der Anzahl der Gewindelöcher gleichviele, sich in Federrichtung der Lagerungsfeder 2 erstreckende Langlöcher 14 auf, die von Kopfschrauben 15 durchgriffen werden, die wiederum in die Gewindelöcher 13 der Halterung 12 eingeschraubt sind. Dadurch ist die Stützfeder 7 in axialer Richtung, also der Federrichtung der Lagerungsfeder 2, einstellbar und feststellbar.

Das vorstehend beschriebene, kompakt aufgebaute Lager läßt sich nach Absetzung und Montage eines Aggregaten auf der Plattform 4 hinsichtlich des Federspiels a,b der Lagerungsfeder 2 genau einstellen. Damit ist es möglich, daß die Federspielbereiche a, b nach dem Aufsetzen der Last dem Betrage nach exakt gleich groß gehalten werden können, so daß das vorausberechnete Federspiel eingehalten oder nahezu

eingehalten werden kann. Die Einstellung des Federspiels erfolgt durch axiale Verstellung und Festschraubung der Stützfeder 7 in dem bzw. an dem Gehäuse 1, was auf einfache Weise möglich ist.

Da die so eingestellte Lage der Stützfeder 7 in der Regel nicht mehr geändert wird, kann diese Lage durch Verstiftung mittels eines Kerbstiftes 16, der vom Gehäuse 1 in die Halterung 12 der Stützfeder 7 eindringt, fixiert sein.

Das erläuterte Lager ermöglicht einmal eine Dämpfung der Schwingungen des von ihm abgestützten Aggregates und zum anderen eine starke Dämpfung extern auf das Lager einwirkender Kräfte sowohl in Federrichtung der Lagerungsfeder 2 als auch senkrecht dazu. Es ist somit möglich, daß auch starke Seegangsbewegungen in ihrer Einwirkung auf z.B. den Schiffsantriebsmotor in jeder Richtung so beherrscht werden können, daß ein hartes Aufstoßen des Motors in seiner Lagerung vermieden ist. Dies wird erreicht durch einstellbare Zusammenwirkung der beiden Lagerfedern 2 und 7.

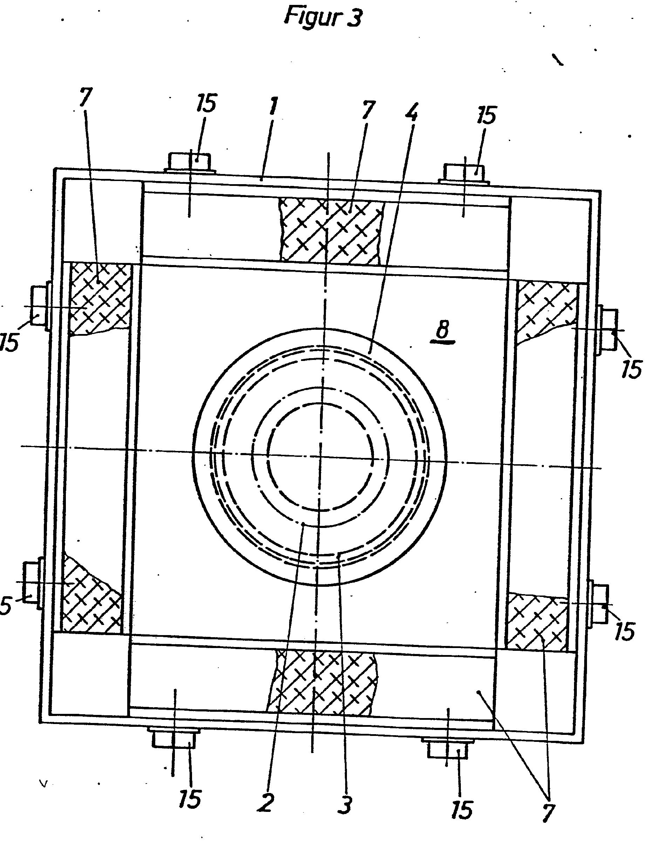

Die in Figur 3 dargestellte Ausführungsmöglichkeit unterscheidet sich von der vorstehend beschriebenen nur dadurch, daß das Gehäuse 1 im Grundriß quadratisch ausgebildet ist und daß die Stützfeder 7 aus einzelnen geraden Federelementen 7a, 7b besteht. Die Halterung 12 der Feder 7 ist entsprechend angepaßt. Im übrigen sind Aufbau und Funktion wie beim Beispiel nach den Figuren 1 und 2 gestaltet.

0014389

Anmelderin: Ingenieurkontor Lübeck, Prof. Gabler OHG,
Niels-Bohr-Ring 5, 2400 Lübeck

Patentansprüche:

1. Weichfederndes Lager für Aggregate, deren mechanische Schwingungen zu dämpfen sind, bestehend aus einem Gehäuse und einer darin untergebrachten, metallenen Lagerungsfeder, die in Gravitationsrichtung wirkende Kräfte aufnimmt, dadurch gekennzeichnet, daß der Lagerungsfeder (2) in dem Gehäuse (1) eine Stützfeder (7) seitlich so zugeordnet ist, daß diese nach Überwindung des Federspiels der Lagerungsfeder an deren Belastung in ihrer Federrichtung beteiligt ist und ferner horizontale Kräfte aufnimmt, und daß die Stützfeder (7) zur Einstellung des Federspiels der Lagerungsfeder an dem Gehäuse in der Höhe einstellbar und feststellbar ist.

2. Lager nach Anspruch 1, dadurch gekennzeichnet, daß die Stützfeder (7) aus wenigstens einem Gummifederelement oder wenigstens einem Metallelement besteht, das einerseits durch Anschlagflächen (9,10) mit der Lagerungsfeder (2) in Verbindung steht und andererseits eine Halterung (12) mit mehreren Gewindelöchern (13) aufweist, in die Kopfschrauben (15) eingreifen, und daß am Gehäuse (1) mehrere sich in Federrichtung der Lagerungsfeder (2) erstreckende Langlöcher (14) vorgesehen sind, durch die sich die Kopfschrauben hindurch in die Gewindelöcher erstrecken.

3. Lager nach den Ansprüchen 1 und 2, dadurch gekennzeichnet, daß die Halterung (12) der Stützfeder (7) nach Einstellung und Feststellung dieser Feder durch Verstiftung (16) am Gehäuse (1) zusätzlich fixiert ist.

4. Lager nach Anspruch 2 oder 3, dadurch gekennzeichnet, daß zwei V-förmig zueinander angeordnete Stützfederelemente

- 7 -   0014389

(7a,7b) vorgesehen sind und ein zu der Lagerungsfeder
(2) hin offenes V bilden, dessen Enden durch eine gemeinsame Überbrückung (8) starr miteinander verbunden sind,
und daß die Überbrückung die Anschlagflächen (9,10)
für die Lagerungsfeder (2) aufweist.

0014389

## Figur 1

0014389

Figur 2

Europäisches
Patentamt

**EUROPÄISCHER RECHERCHENBERICHT**

0014389

Nummer der Anmeldung

EP 80 10 0362

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - C - 752 801</u> (VOIGT)<br><br>  * Seite 1, Zeile 24 bis Seite 3, Zeile 24; Figuren 1-4 *<br><br>-- | 1,2 |
|  | <u>GB - A - 665 079</u> (LORD)<br><br>  * Seite 3, Zeilen 24-48; Figur 10 *<br><br>-- | 1,2 |
|  | <u>US - A - 3 323 764</u> (JOHNSON)<br><br>  * Spalte 3, Zeile 19 bis Spalte 4, Zeile 31; Figuren 1,2 *<br><br>-- | 1,2 |
|  | <u>US - A - 2 697 571</u> (ROSENZWEIG)<br><br>  * Spalte 1, Zeile 60 bis Spalte 3, Zeile 31; Figuren 1-6 *<br><br>-- | 1,2 |
|  | <u>DE - A - 2 307 567</u> (PHOENIX GUMMI-WERKE)<br><br>  * Seite 4; Figuren 1,2 *<br><br>-- | 1-3 |
|  | <u>CH - A - 279 410</u> (ROSENZWEIG)<br><br>  * Seite 1, Zeile 37 bis Seite 2, Zeile 61; Figuren 1-3 *<br><br>-- | 1,2 |
| X | <u>US - A - 3 052 435</u> (ROLLER)<br><br>  * Spalte 1, Zeile 34 bis Spalte 2, Zeile 67; Figur *<br><br>-- | 1,2 |
|  | ./. | |

**KLASSIFIKATION DER ANMELDUNG (Int.Cl. 3)**

F 16 F  3/10
        15/04
B 60 K  5/12

**RECHERCHIERTE SACHGEBIETE (Int. Cl. 3)**

F 16 F
B 60 K
B 63 H
B 63 B
B 60 G
B 61 F

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-05-1980 | ESPEEL |

EPA form 1503.1  06.78

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - A - 1 931 940 (LONG) <br> * Seite 16 bis Seite 21; Figuren 1-19 * <br><br> -- | 1,2 | |
| | US - A - 2 678 797 (ROY) <br> * Spalte 2, Zeile 14 bis Spalte 3, Zeile 68; Figur 1 * <br><br> -- | 1,2 | |
| | FR - A - 1 178 264 (METALASTIK) <br> Figur 1 * <br><br> -- | 4 | RECHERCHIERTE SACHGEBIETE (Int. Cl. 3) |
| A | FR - A - 1 240 894 (HALL) <br><br> -- | 1 | |
| A | GB - A - 614 836 (METALASTIK) <br> * Figur 3 * <br><br> -- | 1,2 | |
| A | GB - A - 25.436 AD 1912 (BRITISH ANTI VIBRATION AND NOISE CIE) <br><br> -- | 1 | |
| A | US - A - 2 929 592 (SPAETGENS) <br><br> --- | 1 | |